Europäisches Patentamt

European Patent Office

Office européen des brevets

(19)

(11) Numéro de publication: **0 010 459**
**B1**

(12) **FASCICULE DE BREVET EUROPEEN**

(45) Date de publication du fascicule du brevet: **17.11.82**

(51) Int. Cl.³: **C 06 B 21/00, F 02 K 9/10**

(21) Numéro de dépôt: **79400601.5**

(22) Date de dépôt: **31.08.79**

(54) **Dispositif et procédé de fabrication d'éléments en poudre agglomérée; éléments ainsi obtenus.**

(30) Priorité: **12.09.78 FR 7826140**

(43) Date de publication de la demande:
**17.09.80 Bulletin 80/9**

(45) Mention de la délivrance du brevet:
**17.11.82 Bulletin 82/46**

(84) Etats contractants désignés:
**BE CH DE GB IT LU NL SE**

(56) Documents cités:
**US - A - 3 890 877**

**INDUSTRIAL AND ENGINEERING CHEMISTRY TECHNICAL PROGRESS SECTION, vol. 53, no. 9, 1961 Columbus, Ohio, US P. B. ARCHIBALD: "Isostatic solvent pressing", pages 737—738.**

(73) Titulaire: **BASSET BRETAGNE LOIRE - B.B.L.**
**8 rue Troyon**
**F-92310 Sevres (FR)**
(73) Titulaire: **SOCIETE NATIONALE DES POUDRES ET EXPLOSIFS**
**12, quai Henri IV**
**F-75181 Paris Cedex 04 (FR)**

(72) Inventeur: **Lebas, Jean-Marie**
**35, rue Roger Jourdain**
**F-92500 Rueil Malmaison (FR)**
Inventeur: **Rat, Pierre**
**10, rue Jeanne d'Arc**
**F-91300 Massy (FR)**
Inventeur: **Dupont, Jean-Marcel**
**Cité Lavoisier 9 rue H. Dautriche**
**E-16000 Angouleme (FR)**
Inventeur: **Vinuesa, Germain**
**Cité Lavoisier 5 rue H. Dautriche**
**F-16000 Angouleme (FR)**

(74) Mandataire: **Ramey, Daniel et al,**
**Cabinet Z. Weinstein 20, avenue de Friedland**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Dispositif et procédé de fabrication d'éléments en poudre agglomérée; éléments ainsi obtenus

L'invention concerne généralement un dispositif et un procédé de fabrication d'éléments en poudre agglomérée qui sont obtenus par compression d'une quantité prédéterminée de poudre dans des moules.

Ce procédé et ce dispositif concernent plus particulièrement la fabrication de chargements unitaires de poudre agglomérée, pour des munitions pour armes de petits, moyens et gros calibres et pour petits engins autopropulsés. Cependant, l'invention s'applique également à la fabrication d'éléments unitaires quelconques, en poudre agglomérée, par exemple de métal, d'alliage métallique ou autre produit pulvérulent, qui sont obtenus par remplissage des moules par de la poudre en vrac et qui forment des éléments unitaires en poudre agglomérée après compression.

Dans la technique antérieure, les moules utilisés sont des moules métalliques, constitués par des cylindres creux dont au moins une extrémité est fermée par un poinçon mobile d'une presse. Chaque moule est rempli de poudre, puis le ou les poinçons, actionnés par la presse, se déplacent à l'intérieur du moule et compriment la poudre. On obtient ainsi de très bonnes caractéristiques dimensionnelles, étant donné que le moule et le ou les poinçons sont sensiblement indéformables Cependant, en raison même de la compression mécanique de la poudre à l'intérieur des moules, au moyen du ou des poinçons, la densité de la poudre agglomérée après compression n'est pas uniforme dans tout le volume de l'élément ainsi obtenu, et, dans le cas de chargement unitaire de poudre propulsive agglomérée, cette mauvaise homogénéité finale de l'élément se traduit par une combustion irrégulière de la poudre et donc par une détérioration des caractéristiques de tir.

De plus, la compression mécanique de la poudre, dans un moule métallique sur une presse nécessite un investissement important, et les cadences de fabrication sont très lentes. La fabrication de ces éléments se révèle ainsi très coûteuse.

On a donc tenté de remplacer la fabrication d'éléments unitaires en poudre agglomérée par compression mécanique dans des moules métalliques et avec des poinçons métalliques, par une compression isostatique dans des moules en matériau souple et/ou élastique, qui sont remplis de poudre, fermés de façon sensiblement étanche, et disposés dans une enceinte de pression remplie d'un fluide sensiblement incompressible, pour y subir une compression isostatique. On a constaté que l'on obtenait ainsi de bien meilleurs résultats, du point de vue de l'homogénéité finale des éléments (et que l'on obtenait en particulier une densité très régulière, donc une combustion très régulière et de très bonnes caractéristiques de tir) et de la cadence de production, qui est extrêmement plus rapide qu'avec des presses mécaniques, et cela au prix d'un investissement beaucoup plus faible.

Cependant, ces grandes améliorations de la densité finale des éléments et des cadences de fabrication, se font au détriment des caractéristiques dimensionnelles. Ces dernières, qui étaient excellentes dans le procédé de compression mécanique, sont beaucoup plus mauvaises dans le cas de la compression isostatique, car les moules en matériau souple et/ou élastique, se déforment nécessairement au cours de la compression. On a constaté que cette déformation était irrégulière, et qu'elle était beaucoup plus prononcée dans la zone médiane des moules, que dans les régions d'extrémité, qui sont fermées de façon étanche. On obtenait ainsi des éléments en poudre agglomérée qui n'avaient pas une forme parfaitement cylindrique droite, mais qui présentaient dans leur zone médiane, un diamètre plus faible qu'à leurs extrémités.

La présente invention a précisément pour but de pallier les inconvénients de ces deux techniques, tout en en conservant les avantages.

L'invention a pour objet un procédé et un dispositif de fabrication d'éléments unitaires en poudre agglomérée, présentant de très bonnes caractéristiques dimensionnelles et une densité très homogène, et que l'on peut fabriquer à des cadences très élevées au prix d'un investissement beaucoup plus faible que dans le cas de la compression mécanique.

Pour cela, l'invention propose donc un moule de fabrication d'éléments en poudre agglomérée obtenus par compression d'une quantité prédéterminée de poudre dans le moule, le moule étant un moule de compression isostatique, réalisé en matériau souple et/ou élastique d'épaisseur sensiblement constante et destiné à être enfermé avec son chargement de poudre dans une enceinte de pression remplie de fluide sensiblement incompressible pour y subir une compression isostatique, ce moule ayant une forme sensiblement cylindrique tubulaire, comprenant par exemple à une extrémité une fond formé d'une pièce avec le reste du moule, et pouvant être fermé à son extrémité opposée par un bouchon amovible, caractérisé en ce que ledit moule a sensiblement une forme en tonneau et présente dans sa partie médiane un diamètre intérieur plus grand qu'à ses extrémités.

On constate que cette caractéristique de forme selon l'invention permet de compenser l'irrégularité de forme que présentait auparavant un élément en poudre agglomérée obtenu dans un moule ayant une forme cylindrique parfaitement droite.

Selon une autre caractéristique de l'invention, la génératrice du cylindre formée par le moule est un arc de cercle ayant un rayon de courbure relativement très grand par rapport à la hauteur du cylindre.

Le centre de courbure de la génératrice précitée est situé soit sensiblement au niveau du milieu de la hauteur de cylindre, soit plus près du fond que de l'extrémité ouverte du cylindre.

Selon encore une autre caractéristique de l'invention, le bouchon amovible comprend au moins deux rondelles ou disques superposés de matériau élastique, le disque ou la rondelle extérieur venant fermer de façon sensiblement étanche l'extrémité ouverte du moule, le disque ou la rondelle intérieur ayant un diamètre légèrement inférieur au diamètre intérieur du moule et étant destiné à prendre appui sur la poudre placée à l'intérieur du moule.

Selon une autre caractéristique de l'invention, le bouchon comprend encore un troisième disque ou rondelle intermédiaire, formant entretoise entre les deux disques ou rondelles précités.

Selon encore une autre caractéristique de l'invention, le moule est traversé axialement sur toute sa hauteur par un noyau en matériau sensiblement incompressible, par exemple métallique, qui traverse de façon étanche le fond précité du moule.

Selon une autre caractéristique de l'invention, le bouchon précité est formé de rondelles enfilées de façon sensiblement étanche sur le noyau précité.

Selon encore une autre caractéristique de l'invention, le fond du moule, traversé par le noyau, comprend un collet interne axial de forme sensiblement tronconique, destiné à former un chanfrein à l'extrémité de l'élément en poudre agglomérée à obtenir.

Selon une autre caractéristique de l'invention, le noyau est de section transversale circulaire, de surface constante ou variant progressivement ou par palier.

Selon encore une autre caractéristique de l'invention, le moule et le bouchon précités sont réalisés en matériau élastique résistant à une température superieure à 80°C, par exemple en néoprène.

L'invention propose également un procédé de fabrication d'éléments unitaires en poudre agglomérée, au moyen de moules du type précédemment décrit, caractérisé en ce qu'il consiste à remplir chaque moule d'une quantité déterminée de poudre, à fermer les moules au moyen des bouchons précités, à les disposer dans une enceinte de pression remplie de fluide sensiblement incompressible, à comprimer le fluide pour soumettre les moules et leur chargement de poudre à une compression isostatique pendant un temps prédéterminé, à revenir à la pression normale, puis à sortir les moules de l'enceinte et à démouler les éléments obtenus.

On comprend que, selon le procédé de l'invention, on peut disposer une grande quantité de moules à l'intérieur d'une même enceinte de pression pour leur faire subir en même temps une compression isostatique, ce qui augmente de façon très importante les cadences de fabrication.

Selon une autre caractéristique de l'invention, le procédé de fabrication consiste également à chauffer les moules et leur chargement dans l'enceinte, par exemple à une température comprise entre 70 et 95°C, quand la poudre précitée contient une certaine quantité d'un plastifiant approprié.

Selon encore une autre caractéristique de l'invention, on soumet les moules et leur chargement à une pression isostatique de 1000 à 1500 bars pendant quelques minutes.

L'invention concerne également les éléments unitaires en poudre agglomérée, qui sont obtenus au moyen du moule selon l'invention ou par exécution du procédé selon l'invention.

Ces éléments forment notamment des chargements de poudre propulsive en particulier pour munitions pour armes de petits et des moyens et gros calibres, et pour petits engins autopropulsés, constitués de grains de poudre à la nitrocellulose agglomérés à l'aide d'une quantité prédéterminée d'un plastifiant gélatinisant approprié.

L'invention sera mieux comprise, et d'autres buts, caractéristiques, détails et avantages de celle-ci apparaîtront plus clairement au cours de la description explicative qui va suivre faite en référence aux dessins schématiques annexés, donnés uniquement à titre d'exemple illustrant deux modes de réalisation de l'invention et dans lesquels:

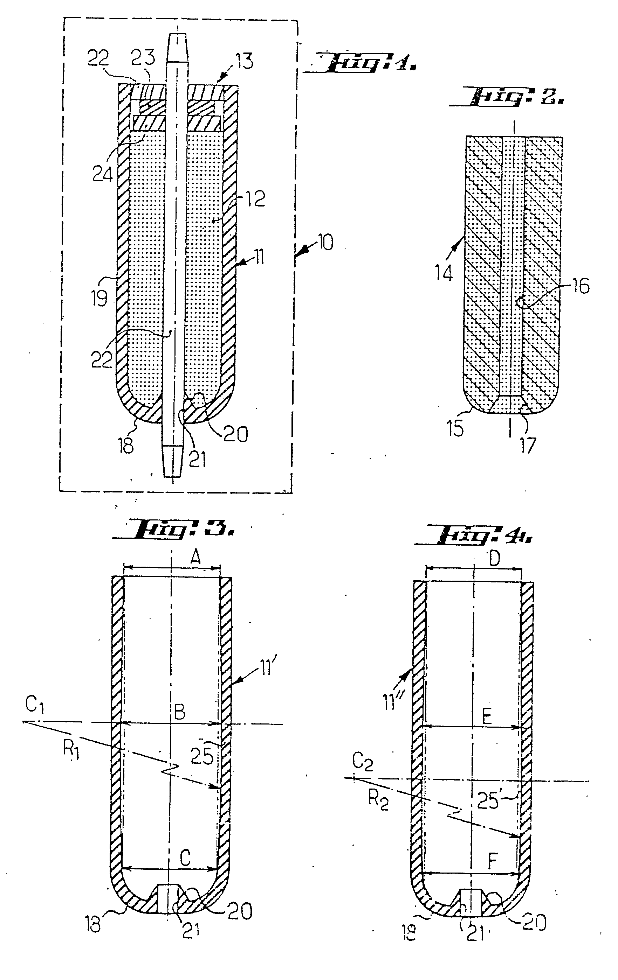

La figure 1 est une vue schématique représentant un moule selon l'invention, rempli de poudre, et disposé dans une enceinte de compression isostatique, représentée par un traite en pointillés; la figure 2 est une vue en coupe d'un élément unitaire aggloméré obtenu selon l'invention; la figure 3 est une vue en coupe d'un moule selon une première forme de réalisation de l'invention; et la figure 4 est une vue en coupe d'un moule selon une variante de réalisation de l'invention.

On a donc représenté schématiquement en figure 1 un dispositif de fabrication d'éléments unitaires en poudre agglomérée selon l'invention, qui comprend essentiellement une enceinte 10 de pression, représentée schématiquement par une ligne en traits pointillés, et qui est destinée à contenir un grand nombre de moules 11 selon l'invention, remplis d'une quantité prédéterminée de poudre 12 et qui sont fermés à leur extrémité couverte, de façon sensiblement étanche, par un bouchon 13.

L'enceinte 10 peut être de n'importe quel type bien connu dans la technique, elle est remplie sensiblement complètement de fluide incompressible tel que l'huile, que l'on peut soumettre à une pression élevée, par exemple de l'ordre de 1000 à 1500 bars pendant un temps prédéterminé approprié. Une telle enceinte 10 est bien connue dans la technique, et ne sera donc pas décrite ici plus en détail.

Dans l'exemple particulier de réalisation représenté dans les dessins, les éléments à obtenir sont des chargements unitaires de poudre propulsive agglomérée, pour des munitions d'armes de petits moyens et gros calibres et pour petits engins autopropulsés, en particulier, et dont l'un a été représenté en coupe en figure 2.

Ce chargement unitaire 14 est de forme sensiblement cylindrique droite, dont une extrémité est formée par une section transversale droite, à contour circulaire, et dont l'extrémité opposée 15 a été arrondie aux angles, comme représenté sur le dessin. Ce chargement unitaire 14 comprend un alésage axial 16, qui débouche à l'extrémité arrondie 15 par un chanfrein 17. Cet alésage 16 peut être à section circulaire constante, comme représenté en figure 2, et dans certains cas, il peut être à section non uniforme, variable progressivement ou par paliers.

Le chargement unitaire 14 est constitué, dans le cas des munitions, de grains de poudre à la nitrocellulose qui sont agglomérés ensemble à l'aide d'un plastifiant gélatinisant de la nitrocellulose, liquide à une température inférieure ou égale à 80°C environ, et qui est présent en quantité faible prédéterminée. Le processus de fabrication de ces chargements unitaires consiste donc à imprégner les grains de poudre à la nitrocellulose à l'aide du plastifiant gélatinisant, à stabiliser les grains de poudre ainsi imprégnés par repos à la température ambiante pendant une durée prédéterminée, à charger les grains de poudre dans un moule, à chauffer l'ensemble à une température de préférence voisine de 80°C, à soumettre le chargement de poudre à une pression prédéterminée, à refroidir l'ensemble et à démouler le chargement unitaire ainsi obtenu.

Selon l'invention, la compression de la poudre sera une compression isostatique, au moyen du dispositif représenté en figure 1.

Dans cet exemple, le moule 11 est fermé à une extrémité par un fond 18, vernant d'une pièce avec la partie sensiblement cylindrique 19 du moule, l'autre extrémité de moule 11 étant ouverte et destinée à être fermée par le bouchon amovible 13. Le fond 18 du moule 11 comprend un collet interne axial 20, de forme extérieure sensiblement tronconique, destiné à former le chanfrein 17 du chargement unitaire 14. Ce collet tronconique 20 est formé axialement avec un alésage 21, destiné à permettre, de façon sensiblement étanche, le montage d'un noyau axial 22 à l'intérieur du moule 11.

Le noyau axial 22 est réalisé en matériau rigide et sensiblement indéformable, par exemple en métal. Ce noyau 22 est destiné à former l'alésage axial 16 du chargement unitaire. Il peut donc être à section circulaire constante, ou bien à section circulaire variable, progressivement ou par paliers. Ce noyau 22 a une longeur qui est supérieure à celle du moule 11, de façon à dépasser du moule 11 à ses deux extrémités, qui, pour faciliter le montage du noyau dans le moule, peuvent être de forme tronconique comme représenté en figure 1

Dans le cas où le moule 11 est pourvu d'un noyau 22, le bouchon 13 est constitué de rondelles superposées 22, 23 et 24 respectivement, qui sont toutes pourvues d'un trou axial permettant de les enfiler, da façon sensiblement étanche, sur le noyau métallique 22. La rondelle 22 a une diamètre qui est sensiblement égal du diamètre intérieur de l'extrémité ouverte du moule 11, pour fermer de façon sensiblement étanche cette extrémité. La rondelle intérieure 24 a un diamètre légèrement inférieur, qui correspond sensiblement au diamètre final de l'élément unitaire 14 a obtenir. Cette rondelle 24 est destinée à prendre appui sur le chargement de poudre 12 placé à l'intérieur du moule 11. Enfin, la rondelle intermédiaire 23 a un diamètre légèrement inférieur au diamètre de la rondelle intérieure 24, et sert d'entretoise, dans un but qui sera expliqué en détail ci-dessous.

Bien entendu, dans le cas où le moule 11 ne comprend pas de noyau axial 22, le bouchon 13 est formé de disques au lieu de rondelles.

Le moule 11 et les rondelles 22, 23 et 24 sont réalisés en matériau souple et/ou élastique avantageusement en caoutchouc. Dans le cas présent, où la poutre doit également subir un chauffage à une température de l'ordre de 80°C, on utilisera avantageusement des moules et des rondelles en néoprène, résistant à une température supérieure, par exemple de l'ordre de 100°C ou plus.

Selon l'invention, le moule 11 a une épaisseur sensiblement constante, sauf bien entendu au niveau du collet 20 formé dans le fond 18, et il a, à l'état normal, une forme sensiblement en tonneau, c'est-à-dire que son diamètre intérieur dans sa partie médiane est plus grand que son diamètre intérieur au voisinage de ses extrémités, comme on le voit mieux dans les figures 3 et 4.

En figure 3, le moule 11' représenté comprend un fond 18 pourvu d'un collet 20 percé axialement en 21, et son diamètre intérieur A à son extrémité ouverte est égal à son diamètre intérieur C au voisinage du fond 18, tandis que son diamètre intérieur B, au niveau du milieu de sa hauteur, est supérieur aux diamètres A et C. Chaque génératrice 25 de la partie sensiblement cylindrique du moule 11' est formée sensiblement par un arc de cercle ayant un rayon de courbure R1 qui est relativement très important par rapport à la hauteur du moule 11'. Les centres de courbure C1 des génératrices 25 sont situés sensiblement au niveau du milieu de la hauteur du moule 11' en figure 3.

Dans le mode de réalisation représenté en figure 4, le moule 11'' comprend également un fond arrondi 18 pourvu d'un collet intérieur axial 20 percé axialement en 21, son diamètre E dans la zone médiane est supérieur à son diamètre intérieur F au niveau du fond 18, qui est lui-même supérieur du diamètre D au niveau de son extrémité ouverte. Comme dans le cas précédent, chaque génératrice 25' de la partie cylindrique du moule 11" est constituée par un arc de cercle ayant un rayon de courbure R2 qui est relativement très grand par rapport à la hauteur du moule 11" mais les centres de courbure C2 sont décalés vers le fond 18, c'est-à-dire qu'ils sont situés à un niveau qui est plus proche du fond 18 que de l'extrémité ouverte du moule. Cette disposition peut s'avérer avantageuse dans certains cas, pour mieux compenser l'irrégularité de forme de l'élément à obtenir, due au voisinage du fond 18 et du collet 20.

Afin d'obtenir la forme "tonneau" adéquate pour une application déterminée, on peut effecteur une expérience dans des conditions précises de granulométrie et de température, avec un moule, soit cylindrique, soit d'une forme "tonneau" déjà obtenue, afin de mesurer la flèche de compaction. Les différences mesurées entre le pièce obtenue et la pièce à obtenir permettent de déterminer le profil de la forme "tonneau" du moule définitif.

A titre d'exemple, on précisera que les moules 11' et 11" peuvent présenter les caractéristiques dimensionnelles suivantes, à l'état normal:

$$A=C=32,6 \text{ mm}$$
$$B=33,8 \text{ mm}$$
$$R1=1880 \text{ mm}$$
$$D=32,2 \text{ mm}$$
$$F=32,8 \text{ mm}$$
$$E=33,4 \text{ mm}$$
$$R2=2500 \text{ mm}$$

la hauteur totale des moules étant de l'ordre de 110 mm.

Le procédé d'utilisation de ces moules est le suivant:

Les noyaux 22 sont tout d'abord placés dans les moules 11, puis les moules sont remplis d'une quantité prédéterminée de poudre, et sont fermés au moyen des rondelles 24, 23, 22 que l'on enfile dans cet ordre sur l'extrémité correspondante du noyau 22. On remarquera au passage que le bouchon 13 pourrait également être réalisé en une seule pièce, ayant la forme des rondelles 22, 23 et 24 superposées. Les moules 11, ainsi préparés, sont placés dans l'enceinte 10, et y subissent une compression isostatique, à une pression de l'ordre de 1000 à 1500 bars. Le temps total de traitement des moules 11 dans l'enceinte 10 est de l'ordre de 5 minutes environ comprenant la mise en pression et la décompression de l'enceinte. Dans le cas de chargements de poudre propulsive pour munitions, qui sont constituées de grains de poudre à la nitrocellulose imprégnés d'un plastifiant gélatinisant, les moules sont également soumis à l'intérieur de l'enceinte à une température de l'ordre de 80°C environ.

Après retour de l'enceinte à la pression normale, les moules 11 sont sortis de l'enceinte et les chargements unitaires 14 sont démoulés. Ce démoulage s'effectue sans problème, car la poudre, après compression, occupe à l'intérieur du moule un volume plus faible que le volume interne du moule à l'état normal. Il y a donc un certain jeu entre la surface interne du moule et le chargement de poudre agglomérée. L'extraction du noyau ne pose non plus pas de problème. En effet, pendant la compression, le faible volume d'air contenu dans la poudre se rassemble autour du noyau 22 et forme ainsi une sorte de film entre le noyau et la surface de l'alésage axial 16 de chaque chargement unitaire 14.

Les chargements 14 ainsi obtenus présentent de bonnes caractéristiques dimensionnelles et ont une forme sensiblement cylindrique droite, la flèche maximale constatée, n'étant pas supérieure à 2/10 ème de millimètre pour un diamètre extérieur de 29 mm environ. A titre d'exemple, on peut indiquer que, si on utilisait un moule 11 qui, à l'état normal, serait sensiblement cylindrique droit, on obtiendrait des chargements 14 présentant en leur milieu une flèche de l'ordre de 1 mm pour un diamètre de 29 mm environ.

Les caractéristiques dimensionnelles du chargement 14 au niveau de ses extrémités sont également très bonnes.

En particulier, la présence de la rondelle entretoise 23 dans le bouchon amovible 13 permet d'atténuer l'effet de bord qui est dû au bouchon 13 de fermeture de cette extrémité du moule 11. En effet, cette extrémité du moule 11 présente une irrégularité de forme et d'épaisseur par rapport au reste du moule, et cette irrégularité se traduit par une irrégularité dimensionnelle de la face droite d'extrémité du chargement 14. Cette irrégularité dimensionnelle finale est d'autant moins sensible que cette extrémité du chargement 14 est éloignée de la rondelle 22 fermant le moule 11. La rondelle entretoise 23 est précisément utilisée dans ce but.

Bien entendu, l'invention n'est nullement limitée aux modes de réalisation décrits et représentés qui n'ont été donnés qu'à titre d'exemple.

### Revendications

1. Moule de fabrication d'éléments en poudre agglomérée, obtenus par compression d'une quantité prédéterminée de poudre dans le moule, le moule étant un moule de compression isostatique, réalisé en matériau souple et/ou élastique d'épaisseur sensiblement constante et destiné à être enfermé avec son chargement de poudre dans une enceinte de pression remplie de fluide sensiblement incompressible pour y subir une compression isostatique, ce moule ayant une forme sensiblement cylindrique tubulaire, comprenant par exemple à une extrémité un fond formé d'une pièce avec le reste du moule, et pouvant être fermé à son extrémité opposée par un bouchon amovible, caractérisé en ce que ledit moule a sensiblement une forme en tonneau et présente dans sa partie médiane un diamètre intérieur plus grand qu'à ses extrémités.

2. Moule selon la revendication 1, caractérisé en ce que la génératrice du cylindre formée par le moule est en arc de cercle ayant un rayon de courbure relativement très grand par rapport à la hauteur du cylindre.

3. Moule selon la revendication 2, caractérisé en ce que le centre de courbure de la génératrice précitée est situé sensiblement au niveau du milieu de la hauteur du cylindre.

4. Moule selon la revendication 2, caractérisé en ce que le centre de courbure de la génératrice précitée est situé plus près du fond que de l'extrémité ouverte du cylindre.

5. Moule selon l'une des revendications précédentes, caractérisé en ce que le bouchon amovible comprend au moins deux rondelles ou disques superposés de matériau élastique, le disque ou la rondelle extérieur venant fermer de façon sensiblement étanche l'extrémité ouverte du moule, le disque ou la rondelle intérieur ayant un diamètre légèrement inférieur au diamètre intérieur du moule et étant destiné à prendre appui sur la poudre placée à l'intérieur du moule.

6. Moule selon la revendication 5, caractérisé en ce que le bouchon comprend encore un troisième disque ou rondelle intermèdiaire, formant entretoise entre les deux disques ou rondelles précités.

7. Moule selon l'une des revendications précédentes, caractérisé en ce qu'il est traversé axialement sur toute sa hauteur par un noyau en matériau sensiblement incompressible, par exemple métallique, qui traverse de façon étanche le fond précité du moule.

8. Moule selon la revendication 7, caractérisé en ce que le bouchon précité est formé de rondelles montées enfilées de façon sensiblement étanche sur le noyau précité.

9. Moule selon la revendication 7 ou 8, caractérisé en ce que le fond du moule, traversé par le noyau, comprend un collet interne axial de forme sensiblement tronconique, destiné à former un chanfrein à l'extrémité de l'élément en poudre agglomérée à obtenir.

10. Moule selon la revendication 7 ou 8, caractérisé en ce que le noyau est à section transversale circulaire, de surface constante ou variant progressivement ou par paliers.

11. Moule selon l'une des revendications précédentes, caractérisé en ce que le moule et le bouchon précités sont réalisés en matériau élastique résistant à une température supérieur à 80°C, par exemple en néoprène.

12. Procédé de fabrication d'éléments unitaire en poudre agglomérée, au moyen de moules du type décrit dans l'une des revendications précédentes, caractérisé en ce qu'il consiste à remplir chaque moule d'une quantité prédéterminée de poudre, à fermer les moules au moyen des bouchons précités, à les disposer dans une enceinte de pression remplie de fluide sensiblement incompressible, à mettre l'enceinte sous pression pour soumettre les moules et leur chargement de poudre à une compression isostatique pendant un temps prédéterminé, à revenir à la pression normale, puis à sortir les moules de l'enceinte et à démouler les éléments obtenus.

13. Procédé selon la revendication 12, caractérisé en ce qu'il consiste également à chauffer les moules et leur chargement dans l'enceinte, par exemple à une température comprise entre 70 et 95°C, quand la poudre précitée contient une certaine quantité d'un plastifiant approprié.

14. Procédé selon la revendication 12 ou 13, caractérisé en ce qu'on soumet les moules et leur chargement à une pression isostatique de 1000 à 1500 bars pendant quelques minutes.

15. Eléments unitaires en poudre agglomérée, caractérisés en ce qu'ils sont obtenus au moyen des moules décrits dans l'une des revendications 1 à 11 ou par exécution du procédé décrit dans l'une des revendications 12 à 14.

16. Eléments selon la revendication 15, caractérisés en ce qu'ils forment des chargements de poudre propulsive en particulier pour munitions pour armes de petits, moyens et gros calibres, et pour petits engins autopropulsés, constitués de grains de poudre à la nitrocellulose agglomérés à l'aide d'une quantité prédéterminée d'un plastifiant gélatinisant approprié.

**Patentansprüche**

1. Pressform zur Herstellung von Elementen aus zusammengeballtem Pulver, die durch Zusammendrücken einer vorbestimmten Pulvermenge in der Pressform erzeugt werden, wobei die Pressform eine isostatische Verdichtungspressform aus nachgiebigem und/oder elastischem Werkstoff von im wesentlichen konstanter Stärke ist und bestimmt ist, mit ihrer Pulverladung in ein mit einem im wesentlichen nicht zusammendrückbaren strömungsfähigen Medium gefülltes Druckgefäss eingeschlossen, um dort einer isostatischen Verdichtung unterworfen zu werden, wobei diese Pressform eine im wesentlichen zylindrische, rohrförmige Gestalt hat und z.B. an einem Ende einen einstückig, mit dem Restteil der Pressform gebildeten Boden umfasst und an seinem entgegengesetzten Ende durch einen abnehmbaren Stopfen verschlossen werden kann, dadurch gekennzeichnet, dass die Pressform eine im wesentlichen fassförmige Gestalt hat und in ihrem Mittelteil einen grösseren Innendurchmesser als an ihren Enden aufweist.

2. Pressform gemäss Anspruch 1, dadurch gekennzeichnet, dass die Erzeugende des durch die Pressform gebildeten Zylinders kreisbogenförmig ist mit einem in Bezug auf die Zylinderhöhe verhältnismässig sehr grossen Krümmungsradius.

3. Pressform gemäss Anspruch 2, dadurch gekennzeichnet, dass der Krümmungsmittelpunkt der Erzeugenden im wesentlichen im Bereich der Mitte der Zylinderhöhe liegt.

4. Pressform gemäss Anspruch 2, dadurch gekennzeichnet, dass der Krümmungsmittelpunkt der Erzeugenden näher zum Boden als zu dem offenen Ende des Zylinders liegt.

5. Pressform nach einem der vorangehenden Ansprüche, dadurch gekennzeichnet, dass der abnehmbare Stopfen wenigstens zwei übereinanderliegende Lochscheiben bzw. Scheibend aus elastischem Werkstoff umfasst, wobei die äussere Scheibe bzw. Lochscheibe das offene Ende der Pressform im wesentlichen dicht verschliesst, wobei die innere Scheibe bzw. Lochscheibe einen etwas kleineren Durchmesser als der Innendurchmesser der Pressform hat und zur Abstützung auf dem in das Innere der Pressform eingebrachten Pulver bestimmt ist.

6. Pressform nach Anspruch 5, dadurch gekennzeichnet, dass der Stopfen noch eine dritte Scheibe bzw. Zwischenlochscheibe umfasst, welche ein Abstandsstück zwischen den beiden früher genannten Scheiben bzw. Lochscheiben bildet.

7. Pressform nach einem der vorangehenden Ansprüche, dadurch gekennzeichnet, dass sie in Axialrichtung über ihre gesamte Höhe durch einen Kern aus nicht zusammendrückbarem, z.B. metallischem Werkstoff durchsetzt wird, welcher den Pressformboden abdichtend durchsetzt.

8. Pressform nach Anspruch 7, dadurch gekennzeichnet, dass der Stopfen aus auf dem Kern im wesentlichen abdichtend aufgeschobenen Lochscheiben besteht.

9. Pressform nach Anspruch 7 oder 8, dadurch gekennzeichnet, dass der durch den Kern durchsetzte Pressformboden einen inneren axialen im wesentlichen kegelstupfförmigen Bund aufweist, der bestimmt ist, eine Abfasung an dem Ende des zu erzeugenden Elementes aus zusammengeballtem Pulver zu bilden.

10. Pressform nach Anspruch 7 oder 8, dadurch gekennzeichnet, dass der Kern einen kreisrunden Querschnitt mit gleichbleibendem oder fortschreitend bzw. stufenweise veränderlichem Flächeninhalt hat.

11. Pressform nach einem der vorangehenden Ansprüche, dadurch gekennzeichnet, dass die Pressform und der Stopfen aus einem elastischen, eine Temperatur über 80°C widerstandsfähigen Werkstoff, z.B. aus Neopren hergestellt sind.

12. Verfahren zur Herstellung von Einheitselementen aus zusammengeballtem Pulver mittels Pressformen der in einem der vorangehenden Ansprüche geschilderten Bauart, dadurch gekennzeichnet, dass es darin besteht, jede Press-form mit einer vorbestimmten Pulvermenge zu füllen, die Pressformen mittels der Stopfen zu verschliessen, sie in ein mit einem im wesentlichen nicht zusammendrückbaren strömungsfähigen Medium gefüllten Druckgefäss hineinzustellen, das Gefäss unter Druck zu setzen, um die Pressformen mit deren Pulverladung einer isostatischen Verdichtung während einer vorbestimmten Zeit zu unterwerfen, auf einen Normaldruck zurückzukommen und dann die Pressformen aus dem Gefäss herauszunehmen und die erzeugten Elemente abzustreifen.

13. Verfahren nach Anspruch 12, dadurch gekennzeichnet, dass es ebenfalls darin besteht, die Pressformen und deren Ladung in dem Gefäss z.B. bis auf eine zwischen 70 und 95°C liegende Temperatur zu erwärmen, wenn das Pulver eine gewisse Menge eines geeigneten Plastiziermittels enthält.

14. Verfahren nach Anspruch 12 oder 13, dadurch gekennzeichnet, dass man die Pressformen und deren Ladung einem isostatischen Druck von 1000 bis 1500 Bar während einiger Minuten aussetzt.

15. Einheitselemente aus zusammengeballtem Pulver, dadurch gekennzeichnet, dass sie mittels der in einem der Ansprüche 1 bis 11 beschriebenen Pressformen oder mittels Durchführung des in einem der Ansprüche 12 bis 14 geschilderten Verfahrens erzeugt werden.

16. Elemente nach Anspruch 15, dadurch gekennzeichnet, dass sie Vortriebspulverladungen insbesondere für Munitionen für Waffen kleines, mittelgrosses und grosses Kalibers sowie für kleine selbstangetriebene Geräte bilden, wobei sie aus Pulverkörnern aus mittels einer vorbestimmten Menge eines geeigneten gelatinisierenden Plastiziermittels zusammengeballten Nitrozellulose bestehen.

**Claims**

1. Moulds for making elements from agglomerated powder obtained through compression of a predetermined amount of powder within the mould, the mould being an isostatic compression mould made from a yielding and/or resilient material of substantially constant thickness and adapted to be enclosed together with its powder load within a pressure vessel filled with a substantially incompressible fluid for undergoing an isostatic compression there, this mould having a substantially cylindrical tubular shape comprising for instance at one end a bottom made in one piece with the remainder of the mould and which may be closed at its opposite end with a removable plug, characterized in that said mould has substantially a barrel-like shape and exhibits in its middle part an inner diameter greater than at its ends.

2. Mould according to claim 1, characterized in that the generating line of the cylinder constituted by the mould is an arc of circumference having a relatively very large radius of curvature with respect to the cylinder height.

3. Mould according to claim 2, characterized in that the centre of curvature of said generating line is located substantially at the middle of the cylinder height.

4. Mould according to claim 2, characterized in that the centre of curvature of said generating line is located closer the bottom than to the open end of the cylinder.

5. Mould according to one of the foregoing claims, characterized in that the removable plug comprises at least two overlying washers or discs of resilient material, the outer disc or washer shutting off the open end of the mould in substantially fluid-tight relationship, the inner disc or washer having a diameter slightly smaller than the inner diameter of the mould and being adapted to bear upon the powder placed inside of the mould.

6. Mould according to claim 5, characterized in that the plug further comprises a third disc or intermediate washer forming a spacer between both aforesaid discs or washers.

7. Mould according to one of the foregoing claims, characterized in that axially therethrough and over its whole height extends a core of substantially incompressible for instance metallic material which extends in sealing relationship through said bottom of the mould.

8. Mould according to claim 7, characterized in that said plug consists of washers mounted in slipped-on substantially fluid-tight relationship on said core.

9. Mould according to claim 7 or 8, characterized in that the bottom of the mould through which extends the core comprises an axial inner collar of substantially frusto-conical shape adapted to form a chamfer at the end of the element of agglomerated powder to be obtained.

10. Mould according to claim 7 or 8, characterized in that the core has a substantial circular cross-section of constant area or varying gradually or step-wise.

11. Mould according to one of the foregoing claims, characterized in that said mould and plug are made from resilient material withstanding a temperature higher than 80°C, for instance from neoprene.

12. Method of making unit elements from agglomerated powder by means of moulds of the kind described in one of the foregoing claims, characterized in that it consists in filling each mould with a predetermined amount of powder, closing the moulds by means of said plugs, placing them within a pressure vessel filled with a substantially incompressible fluid, pressurizing the vessel for subjecting the moulds and their powder loads to an isostatic compression for a predetermined time, restoring the normal pressure and then removing the moulds from the vessel and stripping the elements obtained.

13. Method according to claim 12, characterized in that it also consists in heating the moulds and their loads within the vessel for instance up to a temperature ranging between 70° and 95°C when said powder contains a certain amount of a suitable plasticizer.

14. Method according to claim 12 or 13, characterized in that the moulds and their loads are subjected to an isostatic pressure of 1,000 to 1,500 bars for a few minutes.

15. Unit elements of agglomerated powder, characterized in that they are obtained by means of the moulds described in one of claims 1 to 11 or by carrying out the method described in one of claims 12 to 14.

16. Elements according to claim 15, characterized in that they form propelling powder charges in particular for ammunitions for weapons of small, medium and large calibres and for small self-propelled appliances, consisting of nitrocellulose powder grains agglomerated with a predetermined amount of a suitable gelatinizing plasticizer.

Fig. 1.

Fig. 2.

Fig. 3.

Fig. 4.